# EUROPÄISCHE PATENTSCHRIFT

(11) **EP 0 978 616 B1**
(45) Veröffentlichungstag und Bekanntmachung des Hinweises auf die Patenterteilung: **01.10.2003**
(21) Anmeldenummer: 99114434.6
(22) Anmeldetag: 22.07.1999
(51) Int. Cl.: E05D 5/08, E05D 5/02

(54) **Beschlagteil**
Fitting component
Elément de ferrure

(30) Priorität: 05.08.1998 DE 29814045 U; 19.10.1998 DE 29818605 U
(43) Veröffentlichungstag der Anmeldung: 09.02.2000
(73) Patentinhaber: Arturo Salice S.p.A., I-22060 Novedrate (Como) (IT)
(72) Erfinder:
(74) Vertreter: Gossel, Hans K., Dipl.-Ing.

(56) Entgegenhaltungen:
- EP-A- 0 088 428
- EP-A- 0 705 987
- CH-A- 444 704
- DE-A- 19 615 191
- DE-U- 9 212 492
- US-A- 4 091 499
- US-A- 4 167 802
- US-A- 4 982 476

## Beschreibung

Die Erfindung betrifft einen Beschlagteil, vorzugsweise für Möbel wie z.B. einen Schamiertopf, mit Bohrungen des Beschlagteils durchsetzenden Befestigungsschrauben, die in vorgebohrte Bohrungen eines Korpusteils oder einer Möbeltür einsetzbar sind, nach dem Oberbegriff des Patentanspruchs 1.

Sollen beispielsweise Scharniertöpfe von Scharnieren, die deren beweglichen Teile bilden, mit einer Tür verbunden werden, ist es erforderlich, nach dem Einsetzen des Schamiertopfs in die diesem angepaßte flache Sacklochbohrung die Bohrungen des Befestigungsflansches des Schamiertopfs zu den vorgebohrten Löchern der Tür auszurichten, bevor die Befestigungsschrauben eingeschraubt und festgezogen werden können. Dieses Ausrichten der Bohrungen des Befestigungsflansches zu den vorgebohrten Bohrungen der Tür und das anschließende Einsetzen, Einschrauben und Festziehen der Befestigungsschrauben erfordert zusätzliche Zeit, die die Fertigungszeiten in unerwünschter Weise verlängern.

Aus US 4,167,802 A ist ein Beschlagteil der eingangs angegebenen Art bekannt, bei dem die Befestigungsbohrungen aus Langlöchern bestehen, die in ihrem mittleren Bereich ihrer langen Seiten mit kreisabschnittförmigen Ausnehmungen versehen sind, die vorzugsweise mit Gewindeabschnitten versehen sind und in denen die mit Gewinden versehenen Abschnitte der Befestigungsschrauben gehaltert sind.

Zum Einschrauben der Befestigungsschrauben von Beschlagteilen der eingangs angegebenen Art werden häufig elektrische Schraubenzieher verwendet. Derartige Einschraubgeräte können auf ein Einschraubmoment geeicht oder eingestellt sein, das auf übliche Befestigungsschrauben abgestimmt ist. Da jedoch die erfindungsgemäßen Schrauben nur einen kürzeren mit einem Gewindeabschnitt versehenen Schaftteil besitzen, können diese bei einer Montage mit elektrischen Schraubenziehem in den vorgebohrten Bohrungen überdreht werden.

Aufgabe der Erfindung ist es daher, ein Beschlagteil der eingangs angegebenen Art zu schaffen, bei dessen Montage mit elektrischen Schraubenziehem ein Überdrehen der Befestigungsschrauben verhindert wird.

Erfindungsgemäß wir diese Aufgabe durch die Merkmale des Patentanspruchs 1 gelöst.

Das erfindungsgemäße Beschlagteil läßt sich dadurch einfach und schnell montieren, daß die mit ihren Gewindeabschnitten in den Bohrungen des Beschlagteils gehalterten Befestigungsschrauben die Beschlagteile durchsetzende gewindefreie Abschnitte aufweisen, die zu ihrer Vormontage in die vorgebohrten Bohrungen eines Möbelteils in der Weise eingesetzt werden können, daß dadurch eine Vormontage des Beschlagteils in seiner richtigen Stellung erfolgt. Die Gewindeabschnitte der Befestigungsschrauben sind dadurch in den Bohrungen des Beschlagteils gehaltert, daß sie reibschlüssig an den Bohrungswandungen angreifen oder in diese sogar einschneiden. Ist das Beschlagteil zum Zwecke der Vormontage mit den gewindefreien Abschnitten der Befestigungsschrauben in die vorgebohrten Bohrungen eines Möbelteils eingesetzt worden, erfolgt eine einfache Endmontage dadurch, daß die Befestigungsschrauben in die vorgebohrten Bohrungen mit Hilfe von elektrischen Schraubenziehern eingeschraubt werden, so daß die Gewindeabschnitte, die sich zuvor in den Bohrungen des Beschlagteils befanden, in die vorgebohrten Bohrungen einschrauben. Die Riffelungen oder Rändelungen, die aus radial zu der Schraubenachse verlaufenden Riefen bestehen können, erhöhen kurz vor dem vollständigen Einschrauben der Befestigungsschrauben durch erhöhten Reibschluß mit den Bohrungsrändern der Beschlagteile das Einschraubmoment, so daß auch bei einer Montage mit elektrischen Einschraubgeräten das eingestellte Drehmoment erreicht und somit ein Überdrehen der Befestigungsschrauben verhindert wird.

Nach einer bevorzugten Ausführungsform ist vorgesehen, daß die gewindefreien Abschnitte eine Länge von ca. 2/3 bis 1/3 des Schraubenschaftes haben. Eine ausreichende Länge der gewindefreien Abschnitte ermöglicht es, daß das Beschtagteil gegenüber dem Korpusteil bereits im vormontierten Zustand derart festgelegt ist, daß z.B. eine an den Beschlagteilen angelenkte Tür verlagert werden kann. Die gewindefreien Abschnitte erlauben es außerdem, den Gewindeabschnitt auf eine Mindestlänge zu reduzieren, die gerade noch die notwendige axiale Befestigungskraft für das Beschlagteil liefert. Hierbei wird die Tatsache ausgenutzt, daß die Hauptbelastung auf das Beschlagteil quer zu den Bohrungen des Beschlagteils erfolgt, so daß diese Belastung bereits durch die in die Bohrungen eingesetzten gewindefreien Abschnitte aufgenommen werden kann. Die Gewindeabschnitte selber können also auf eine geringe Länge reduziert werden, um die in Längsrichtung der Bohrungen auftretende Belastung noch aufnehmen zu können. Hierdurch lassen sich die Montagezeiten des erfindungsgemäßen Beschlagteils auf ein Minimum reduzieren, die mit den Montagezeiten einer sog. Schnappvorrichtung, wie z.B. in dem DE-U1-295 06 600 offenbart, vergleichbar sind.

Zweckmäßigerweise weisen die Befestigungsschrauben zwischen ihren Köpfen und ihren Gewindeabschnitten gewindefreie Abschnitte auf, deren Längen der Länge der Bohrungen des Beschlagteils entsprechen. Durch diese Ausgestaltung ist gewährleistet, daß im montierten Zustand die Gewindeabschnitte der Befestigungsschraube vollständig die Bohrungen des Beschlagteils verlassen haben und in die Befestigungsbohrungen eingeschraubt sind. Der Durchmesser des gewindefreien Abschnitts der Befestigungsschraube entspricht zweckmäßigerweise dem Durchmesser der Bohrungen des Beschlagteils.

Um ein Einschrauben der Befestigungsschrauben nur mit verringerten Drehungen zu erreichen, können die Gewindeabschnitte der Befestigungsschrauben aus doppelgängigen Gewinden bestehen.

Zweckmäßigerweise bestehen die Befestigungsschrauben aus sogenannten Euroschrauben.

In weiterer Ausgestaltung der Erfindung ist vorgesehen, daß die Bohrungen des Beschlagteils aus Löchern mit gebördelten Rändern bestehen. Diese Ausgestaltung wird zweckmäßigerweise gewählt, wenn die Beschlagteile aus gestanzten Blechen bestehen.

Vorzugsweise bestehen die Befestigungsschrauben aus Senkkopfschrauben, die auf ihrer kegelstumpfförmigen Unterseite mit Riffelungen oder Rändelungen versehen sind.

Um in der Schlußphase des Einschraubens der Befestigungsschrauben das Einschraubdrehmoment noch weiter zu erhöhen, können auch die Ränder der Bohrungen des Beschlagteils mit Riffelungen oder Rändelungen versehen sein.

Bei Verwendung von Senkkopfschrauben sind zweckmäßigerweise die Ränder der Bohrungen etwa komplementär zu den kegelstumpfförmigen Unterseiten der Senkkopfschrauben ausgebildet und mit Riffelungen oder Rändelungen versehen.

In weiterer Ausgestaltung der Erfindung ist vorgesehen, daß die Bohrungen der Beschlagteile mehreckig, vorzugsweise sechseckig ausgebildet sind. Bei dieser Ausgestaltung sind die selbstschneidenden Befestigungsschrauben dadurch in den Bohrungen der Beschlagteile gehalten und zentriert, daß sie sich nur etwa punktförmig in die Seiten der Bohrungen einschneiden.

Ausführungsbeispiele der Erfindung werden nachstehend anhand der Zeichnung näher erläutert. In dieser zeigt
- Fig. 1: eine Draufsicht auf einen vorgebohrten Bereich einer Möbeltür der zur Aufnahme des aus
- Fig. 2: ersichtlichen Scharniertopfes mit Befestigungsflansch eines Möbelscharniers dient,
- Fig. 3: eine Seitenansicht eines Schamiertopfes des Möbelscharniers nach Fig. 2, der zu dem Einsetzen in die vorgebohrten Bohrungen der Tür ausgerichtet ist,
- Fig. 4: den in den vorgebohrten Bohrungen der Tür befestigten Scharniertopf, und zwar mit einer vollständig eingeschraubten Befestigungsschraube und einer nur mit ihrem gewindefreien Endschaft in eine Befestigungsbohrung eingesetzten Befestigungsschraube,
- Fig. 5: eine Draufsicht auf eine zweite Ausführungsform eines Scharniertopfes mit Befestigungsflansch eines Möbelscharniers,
- Fig. 6: einen Schnitt durch den Befestigungsflansch des Möbelscharniers nach Linie VI - VI in Fig. 5 und
- Fig. 7: eine Seitenansicht der Befestigungsschraube für den Scharniertopf mit Befestigungsflansch nach den Fig. 5 und 6.

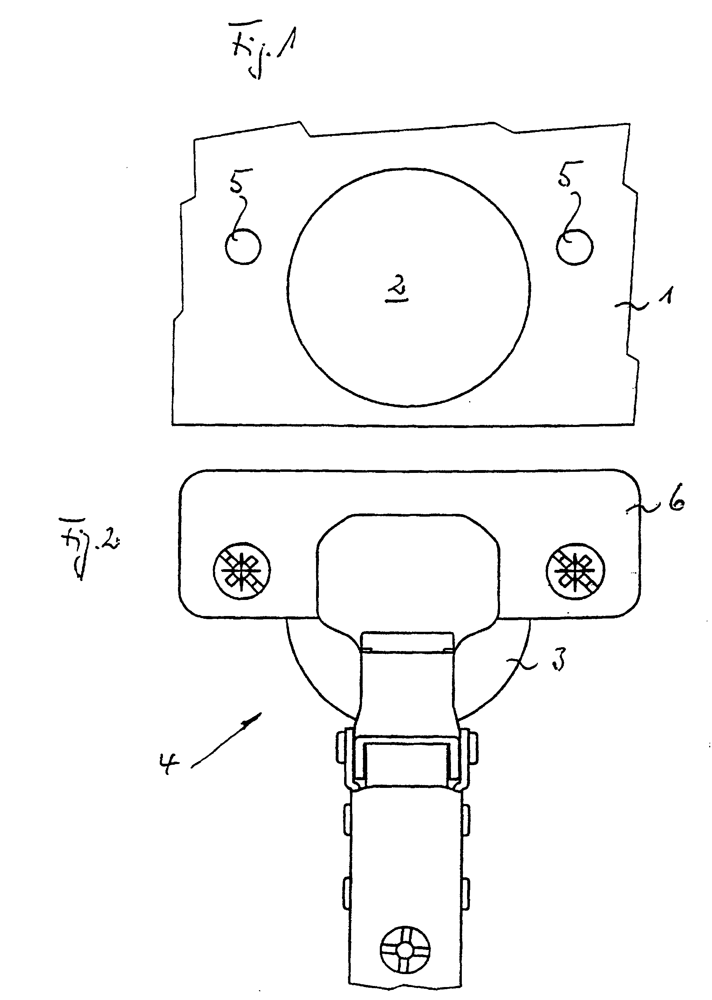

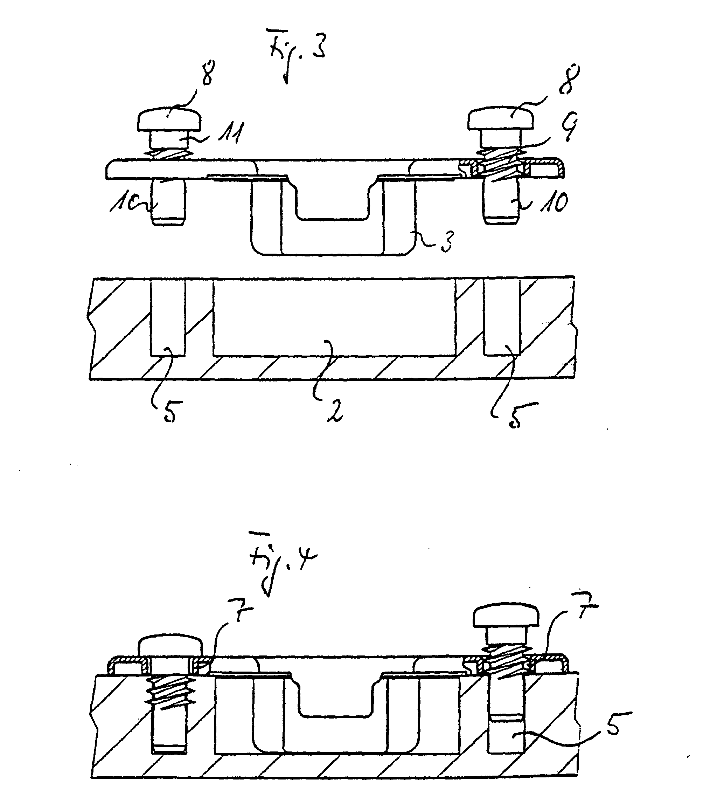

Aus Fig. 1 ist eine Draufsicht auf einen Randabschnitt einer Möbeltür 1 ersichtlich, die mit einer flachen Sacklochbohrung 2 für den Scharniertopf 3 eines aus Fig. 2 ersichtlichen Doppellenkerscharniers 4 versehen ist. Weiterhin sind neben der Bohrung 2 zwei weitere Sacklochbohrungen 5 für die Befestigungsschrauben in die Tür 1 eingebohrt.

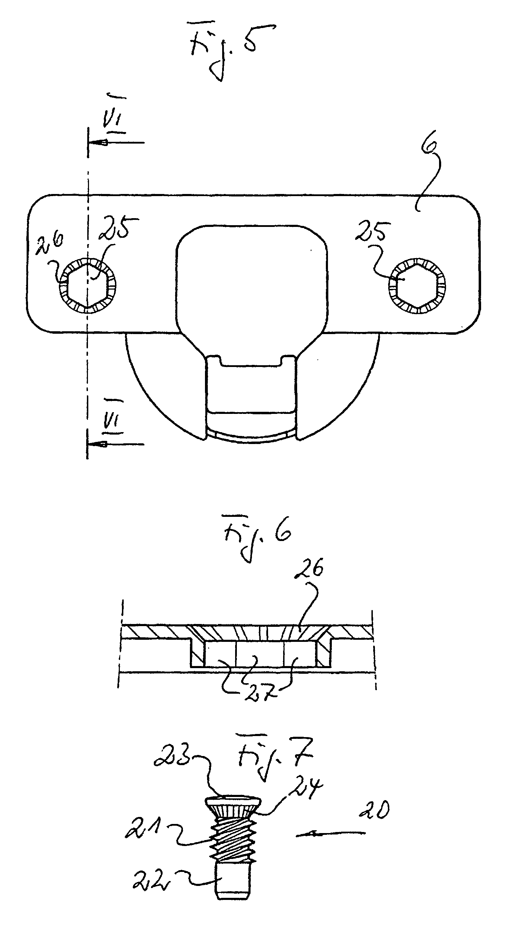

Der topf- oder trogförmige Teil 3 des Schamiers 4 ist in üblicher Weise mit einem Befestigungsflansch 6 versehen, der aus einem Blechstanzteil besteht und mit zwei gebördelten Befestigungsbohrungen 7 versehen ist. In die gebördelten Befestigungsbohrungen 7 sind in der aus Fig. 3 ersichtlichen Weise Befestigungsschrauben 8 gehaltert. Die Befestigungsschrauben 8 weisen einen Gewindeabschnitt 9 mit einem selbstschneidenden Gewinde, einen endseitigen gewindefreien Abschnitt 10 und zwischen dem Kopf und dem Gewindeabschnitt 9 einen gewindefreien Abschnitt 11 auf, dessen Länge in etwa der Länge der gebördelten Befestigungsbohrungen 7 entspricht.

Die gewindefreien Endabschnitte 10 der Schraubenschäfte weisen einen Durchmesser auf, der dem Durchmesser der Befestigungsbohrungen 5 entspricht, so daß zum Zwecke der Vormontage die gewindefreien Abschnitte 10 in die Befestigungsbohrungen 5 in der Weise eingesteckt werden können, daß dadurch bereits eine Vormontage des beweglichen Scharnierteils erfolgt. Diese Art der Vormontage ist aus der rechten Seite der Fig. 4 ersichtlich.

Die Befestigungsschrauben 8 sind mit ihren Gewindeabschnitten 9 in der Weise in den gebördelten Bohrungen 7 gehaltert, daß sie vor der Montage nicht verloren gehen können. Außerdem gehen die Gewindeabschnitte 9 der Befestigungsschrauben 8 mit den Bohrungen 7 eine reibschlüssige Verbindung ein, so daß nach dem Einstecken der gewindefreien Abschnitte 10 in die Befestigungsbohrungen 5 bereits eine verhältnismäßig feste Vormontage erfolgt ist. Nach dieser Vormontage brauchen die Befestigungsschrauben 8 nur noch in der aus der linken Seite der Fig. 4 ersichtlichen Weise vollständig eingeschraubt zu werden, so daß dadurch die Endmontage bewirkt ist.

Aus Fig. 5 ist eine zweite Ausführungsform eines aus einem Scharniertopf mit Befestigungsflansch bestehenden Beschlagteils ersichtlich, der in eine flache Sacklochbohrung 2 nach Fig. 1 eingesetzt werden kann und durch Befestigungsschrauben, wie eine in Fig. 7 dargestellt worden ist, befestigt wird, die in die vorgebohrten Bohrungen 5 eingesetzt werden.

Die Befestigungsschraube 20 besitzt einen Schaft, deren oberer Abschnitt 21 mit einem selbstschneidenden Gewinde versehen ist. Der untere Abschnitt 22 des Schafts ist zylindrisch ausgebildet und trägt kein Gewinde. Der gewindefreie Abschnitt 22 entspricht somit dem gewindefreien Abschnitt 10 der ersten Ausführungsform. Die Befestigungsschraube 20 ist als Senkkopfschraube ausgebildet. Der Senkkopf 23 ist auf seiner kegelstumpfförmigen Unterseite 24 mit einer Rändelung oder Riffelung versehen, die beispielsweise aus strahlenförmig nebeneinander liegenden Briefen bestehen kann, die in Richtung auf die Achse der Befestigungsschraube 20 verlaufen.

Die Befestigungsbohrungen 25 des Befestigungsflansches 6 sind mit zu den kegelstumpfförmigen Unterseiten 24 der Köpfe 23 der Senkkopfschrauben 20 komplementären vertieften Rändern 26 versehen. Diese Ränder 26 weisen ebenfalls eine Rändelung oder Riffelung auf. Der Querschnitt der Befestigungsbohrungen 25 ist sechseckig, so daß die Senkkopfschrauben 20 zu ihrer Vormontage in der Weise in die Befestigungsbohrungen 25 eingeschraubt sind, daß sie nur etwa punktförmig in die Seiten 27 der Befestigungsbohrungen 25 einschneiden.

Bei den Senkkopfschrauben 20 kann auf einen gewindefreien Abschnitt zwischen dem Kopf und dem Gewindeabschnitt 21 verzichtet werden, da der Senkkopf selbst eine gute Zentrierung gewährleistet. Die gewünschte Vorfixierung der Senkkopfschrauben und damit des Beschlagteils wird durch die gewindefreien Abschnitte 22 erreicht, die in die vorgebohrten Bohrungen 5 zu ihrer Vorfixierung eingedrückt werden.

## Patentansprüche

1. Beschlagteil, vorzugsweise für Möbel wie z.B. Scharniertopf, mit Bohrungen des Beschlagteils durchsetzenden Befestigungsschrauben, die in vorgebohrte Bohrungen eines Korpusteils oder einer Tür einsetzbar sind,
bei dem
die Befestigungsschrauben (8) mit endseitigen gewindefreien Abschnitten (10) ihrer Schäfte, deren Durchmesser dem Durchmesser der vorgebohrten Bohrungen (5) entspricht, und
jeweils mit einem Gewindeabschnitt (9) versehen sind, der mit einer Befestigungsbohrung, des Beschlagteils eine reibschlüssige Verbindung eingeht, wobei die gewindefreien Abschnitte (10) die Bohrungen (7) des Beschlagteils (1) durchsetzen,
**dadurch gekennzeichnet,**
**dass** die Befestigungsschrauben (20) auf der Unterseite ihrer Köpfe (23) und
die Ränder der Bohrungen des Beschlagteils (6) mit Riffelungen oder Rändelungen versehen sind.

2. Beschlagteil nach Anspruch 1, **dadurch gekennzeichnet, daß** die gewindefreien Abschnitte eine Länge von ca. 2/3 bis 1/3 des Schraubenschaftes haben.

3. Beschlagteil nach Anspruch 1 oder 2, **dadurch gekennzeichnet, daß** der Gewindeabschnitt eine derartige Mindestlänge aufweist, die noch die notwendige Befestigungskraft für das Beschlagteil liefert.

4. Beschlagteil nach einem der Ansprüche 1 bis 3, **dadurch gekennzeichnet, daß** die Befestigungsschrauben (8) zwischen ihren Köpfen und ihren Gewindeabschnitten (9) gewindefreie Abschnitte (11) aufweisen, deren Länge der Länge der Bohrungen (7) entspricht.

5. Beschlagteil nach Anspruch 4, **dadurch gekennzeichnet, daß** der Durchmesser des gewindefreien Abschnitts dem Durchmesser der Bohrungen (7) des Beschlagteils (1) entspricht.

6. Beschlagteil nach einem der Ansprüche 1 bis 5, **dadurch gekennzeichnet, daß** die Gewindeabschnitte (9) aus doppelgängigen Gewinden bestehen.

7. Beschlagteil nach einem der Ansprüche 1 bis 6, **dadurch gekennzeichnet, daß** die Bohrungen des aus einem Blechstanzteil bestehenden Beschlagteils aus Löchern (7) mit gebördelten Rändern bestehen.

8. Beschlagteil nach einem der Ansprüche 1 bis 7, **dadurch gekennzeichnet, daß** die Befestigungsschrauben Senkkopfschrauben (20) sind, die auf ihrer kegelstumpfförmigen Unterseite (24) ihrer Köpfe (23) mit Riffelungen oder Rändelungen versehen sind.

9. Beschlagteil nach Anspruch 8, **dadurch gekennzeichnet, daß** die Ränder (26) der Bohrungen (25) etwa komplementär zu den kegelstumpfförmigen Unterseiten (24) der Senkköpfe (23) ausgebildet sind.

10. Beschlagteil nach Anspruch 8 oder 9, **dadurch gekennzeichnet, daß** die Bohrungen (25) der Beschlagteile (6) mehreckig, vorzugsweise sechseckig, ausgebildet sind.

## Claims

1. A fitting component, preferably for an item of furniture, such as a hinge bracket having fixing screws that pass through fixing holes in the fitting component and are insertable into pre-drilled holes in an item of structural furniture or door,
wherein
the extremities of the shafts of the fixing screws (8) have thread-free sections (10), the diameter of which matches the diameter of the pre-drilled holes (5), and
each is provided with a threaded section (9) that forms a friction lock with a fixing hole of the fitting component, wherein the thread-free sections (10) protrude through the holes (7) in the fitting component (1),
**characterised in that**
the fixing screws (20) are furnished on the underside of the heads (23) thereof
with fluting or knurls, as are the edges of the fixing holes of the fitting component (6).

2. The fitting component according to claim 1, **characterised in that** the threaded sections extend for approx. 2/3 to 1/3 of the length of the screw shaft.

3. The fitting component according to claim 1 or 2, **characterised in that** the threaded section has a minimum length such that the necessary securing force is still assured for the fitting component.

4. The fitting component according to any of claims 1 to 3, **characterised in that** the fixing screws (8) have thread-free sections (11) between the heads and the threaded sections (9) thereof, the length of which corresponds with the length of the holes (7).

5. The fitting component according to claim 4, **characterised in that** the diameter of the thread-free section corresponds to the diameter of the holes (7) of the fitting component (1).

6. The fitting component according to any of claims 1 to 5, **characterised in that** the threaded sections (9) consist of dual convolutions.

7. The fitting component according to any of claims 1 to 6, **characterised in that** the drilled holes in the fitting component made from a stamped sheet metal part consist of holes (7) having edge-formed borders.

8. The fitting component according to any of claims 1 to 7, **characterised in that** the fixing screws are countersunk head screws (20), which are furnished on the tapered underside (24) of the heads (23) thereof with fluting or knurls.

9. The fitting component according to claim 8, **characterised in that** the edges (26) of the drill holes (25) are conformed to approximately complement the tapered undersides (24) of the countersunk heads (23).

10. The fitting component according to claim 8 or 9, **characterised in that** the drill holes (25) of the fitting components (6) have a polygonal, preferably a hexagonal, conformation.

## Revendications

1. Elément de ferrure, de préférence pour meubles, comme par exemple coupelle de charnière, comportant des vis de fixation traversant des alésages de l'élément de ferrure, qui sont insérables dans des alésages pré-percés d'une pièce de corps ou d'une porte,
dans lequel
les vis de fixation (8) sont dotées du côté de leur extrémité de sections (10) de leurs tiges dépourvues de filetage, dont le diamètre correspond au diamètre des alésages pré-percés (5), et
respectivement d'une section filetée (9) qui est en liaison de frottement avec un alésage de fixation de l'élément de ferrure, les sections dépourvues de filetage (10) traversant les alésages (7) de l'élément à ferrure (1),
**caractérisé en ce que**
les vis de fixation (20) sont pourvues sur la face inférieure de leurs têtes (23) de cannelures ou crénelures,
de même que les bords des alésages de l'élément de ferrure (6).

2. Elément de ferrure selon la revendication 1, **caractérisé en ce que** les sections dépourvues de filetage ont une longueur d'environ 2/3 à 1/3 de la tige de la vis.

3. Elément de ferrure selon la revendication 1 ou 2, **caractérisé en ce que** la section filetée présente une longueur minimale telle qu'elle fournit la force de fixation encore nécessaire pour l'élément de ferrure.

4. Elément de ferrure selon l'une quelconque des revendications 1 à 3, **caractérisé en ce que** les vis de fixation (8) présentent entre leurs têtes et leurs sections filetées (9) des sections dépourvues de filetage (11) dont la longueur correspond à la longueur des alésages (7).

5. Elément de ferrure selon la revendication 4, **caractérisé en ce que** le diamètre de la section dépourvue de filetage correspond au diamètre des alésages (7) de l'élément de ferrure (1).

6. Elément de ferrure selon l'une quelconque des revendications 1 à 5, **caractérisé en ce que** les sections filetées (9) consistent en filetages à double pas.

7. Elément de ferrure selon l'une quelconque des revendications 1 à 6, **caractérisé en ce que** les alésages de l'élément de ferrure consistant en une pièce estampée en tôle consistent en trous (7) à bords roulés.

8. Elément de ferrure selon l'une quelconque des revendications 1 à 7, **caractérisé en ce que** les vis de fixation sont des vis à tête fraisée (20) qui sont munies sur la face inférieure en forme de tronc conique (24) de leurs têtes (23) de cannelures ou crénelures.

9. Elément de ferrure selon la revendication 8, **caractérisé en ce que** les bords des alésages (25) sont conformés à peu près en complémentarité aux faces inférieures en forme de tronc conique (24) des têtes fraisées (23).

10. Elément de ferrure selon la revendication 8 ou 9, **caractérisé en ce que** les alésages (25) des éléments de ferrure (6) ont une conformation à angles multiples, de préférence hexagonale.
